# EUROPEAN PATENT SPECIFICATION

(11) **EP 4 037 801 B1**
(45) Date of publication and mention of the grant of the patent: **03.06.2026**
(21) Application number: 20871197.8
(22) Date of filing: 29.09.2020
(51) Int. Cl.: B01D 21/24, B01D 24/38, B01D 24/48, B01D 24/44, B01D 21/00, B01D 21/01, B01D 21/02, B01D 21/30, B01D 21/32, B01D 21/34, B01D 33/00, C02F 1/52, C02F 11/123, C02F 11/14, C02F 103/20

(54) **WASTEWATER TREATMENT SYSTEM AND METHOD**
ABWASSERBEHANDLUNGSSYSTEM UND VERFAHREN
SYSTÈME ET PROCÉDÉ DE TRAITEMENT D'EAUX USÉES

(30) Priority: 02.10.2019 IL 26976419
(43) Date of publication of application: 10.08.2022
(73) Proprietor: Claristreams Ltd., Jerusalem (IL)
(72) Inventor: ZIDON, Yehoyada Aviah, 9234606 Jerusalem (IL); ZIDON, Bnaya, 5401837 Givat Shmuel (IL); LEVY, Eytan Baruch, 4857073 Rosh Ha-ain (IL)
(74) Representative: McNamara, Kathryn
(86) International application number: PCT/IL2020/051059
(87) International publication number: WO 2021/064725

(56) References cited:
- EP-A1- 0 950 639
- EP-A1- 0 950 639
- WO-A1-2017/168054
- GB-A- 2 113 563
- JP-A- S58 180 212
- US-A- 4 460 461
- US-A- 4 707 272
- US-B2- 6 692 642
- US-B2- 7 001 525
- US-B2- 7 691 261
- US-B2- 9 505 638

## Description

### TECHNOLOGICAL FIELD

The presently disclosed subject matter concerns a wastewater treatment system and method.

### BACKGROUND

Wastewater treatment systems are used to help facilities avoid harming the environment or the human health. Livestock facilities for example, which produce wastewater as byproduct, incorporate wastewater treatment systems in their processes to produce wastewater which meet the standards of their local environmental regulations, e.g. for disposal thereof through the municipal sewage system, for irrigation of nearby fields, for running these wastewater into a nearby river, etc. Some relevant documents are GB 2 113 563 A, JP S58 180212 A, US 4 460 461, EP 0 950 639 A1, US 4 707 272 A.

### GENERAL DESCRIPTION

The presently disclosed subject matter concerns wastewater treatment systems for use in livestock facilities such as cowsheds, piggeries, or any other facility producing wastewater as byproduct and treating these wastewater before discharge thereof, optionally through the sewage system.

The term wastewater as disclosed herein refers to any liquid inter alia containing suspended solids, optionally organic. In dairy farms for example, wastewater can originate from floor washing, milking parlors, and collecting yards.

Particularly, the system disclosed herein is configured to receive wastewater influent, remove suspended solids therefrom, and thereby produce a clearer liquid effluent, containing less suspended solids, with respect to the wastewater influent.

Even more particularly, the system disclosed herein is configured to flock the suspended solids in the wastewater to form a wastewater slurry, and then remove the flocks from the wastewater slurry by filtration.

The system can be designed and optimized such that the effluent complies with the standards of certain local environmental regulations, for discharge thereof through municipal sewage system.

The essential features of the invention are set out in independent system claim 1 and method claim 9. Further preferred embodiments are described in dependent claims 2-8, 10-11. The system comprises:
a coagulation-flocculation assenibly having a raw wastewater inlet, a coagulated-flocculated wastewater outlet, a coagulating agent inlet configured to facilitate introduction of coagulating agent to the coagulation-flocculation assembly; the coagulation-flocculation assembly is configured to receive raw wastewater through the raw wastewater inlet, facilitate mixing of the raw wastewater with the coagulating agent therein so as to form coagulated wastewater, facilitate flocculation of the coagulated wastewater so as to form coagulated-flocculated wastewater slurry, and dispense the coagulated-flocculated wastewater through the coagulated-flocculated wastewater outlet; and
a slurry separator comprising an intake area configured for receiving wastewater slurry from the coagulated-flocculated wastewater outlet, a liquid outlet, a sludge outlet, and a filtration module configured to facilitate percolating of liquid therethrough and forming of a filter cake thereon; the slurry separator is configured to receive slurry at the intake area, separate the slurry to liquid and sludge by the filtration module, remove the liquid via the liquid outlet, and remove the sludge via the sludge outlet;
wherein the system further comprises a level maintaining arrangement configured to maintain at least a minimal level of the filter cake.

Optionally, the coagulation-flocculation assembly can further comprise a flocculating agent inlet configured to facilitate introduction of flocculating agent to the coagulation-flocculation assembly. In such a case, the flocculation of the coagulated wastewater includes mixing of the coagulated wastewater with the flocculating agent.

It can be appreciated that at least one of - the removal of the sludge through the sludge outlet, or the dispensing of wastewater slurry through the coagulated-flocculated wastewater outlet, is performed at an adjustable rate, controlled by a respective actuator thereof.

The level maintaining arrangement comprises:
a sensor configured to sense a level parameter indicative of the level of the filter cake on the filtration module, and produce a corresponding level signal indicative of the value of said level parameter; and
a controller configured to receive said level signal and produce a corresponding rate signal configured to be received by the respective actuator so as to adjust the respective flow rate thereof, to maintain at least a minimal level of the filter cake on the filtration module.

According to an example, the actuator is configured to adjust the removal rate of the sludge through the sludge outlet.

The term *raw wastewater* as used herein, refers to wastewater introduced into the coagulation-flocculation assembly, whether these wastewater has gone through any kind of pre-treatment beforehand, or not. Such pre-treatment can include, for example, mixing of the wastewater to enhance homogeneity thereof, sedimentation of the wastewater to achieve some separation between liquids and suspended solids beforehand, chemical treatment, etc.

It can be appreciated that such pre-treatment can include for example pre-flocculation of the wastewater, or even pre-coagulation-flocculation of the wastewater.

The term *liquid* as used herein refers to a part of the slurry which percolates through the filtration module, while the term *sludge* as used herein refers to a part of the slurry which remains above the filtration module and reaches the sludge outlet.

The wastewater treatment system can further comprise an arrangement configured to facilitate such a pre-treatment, e.g. a mixing tank, optionally separate from the coagulation-flocculation assembly, configured to facilitate mixing of the raw wastewater before entering thereof to the coagulation-flocculation assembly. The mixing tank can include a mixing arrangement, e.g., a mixing rotor.

It should be appreciated that the raw wastewater inlet can constitute at least one of the coagulating agent inlet and the flocculating agent inlet. According to an example, at least one of these inlets is located on an intake stream of the raw wastewater into the coagulation-flocculation assembly. Optionally, the coagulating agent inlet and the flocculating agent inlet are unified.

According to an example, the coagulation-flocculation assembly is a unified tank configured to facilitate sequential mixing of the wastewater therewithin, firstly with the coagulating agent and secondly with the flocculating agent.

Optionally, the coagulation-flocculation assembly can include a mixing arrangement configured to enhance the mixing of at least one of the coagulating agent and the flocculating agent with the wastewater.

The system can operate continuously, i.e. constantly receive raw wastewater through the raw wastewater inlet, coagulate these raw wastewater in a coagulation tank, flocculate the coagulated wastewater in a flocculation tank, separate the coagulated-flocculated wastewater into sludge and liquid in a continuous manner, remove the sludge through the sludge outlet, and remove the liquid through the liquid outlet.

The coagulation-flocculation assembly can comprise:
a coagulation tank comprising the raw wastewater inlet, a coagulated wastewater outlet, and the coagulating agent inlet; the coagulation tank configured to receive raw wastewater through the raw wastewater inlet, facilitate mixing of the raw wastewater with the coagulating agent therein, and facilitate dispensing of coagulated wastewater therefrom through the coagulated wastewater outlet; and
a flocculation tank comprising a coagulated wastewater inlet is in flow communication with the coagulated wastewater outlet, and the coagulated-flocculated wastewater outlet; the flocculation tank is configured to receive coagulated wastewater through the coagulated wastewater inlet, facilitate flocculation of the coagulated wastewater therein , and facilitate dosing of the coagulated-flocculated wastewater therefrom through the coagulated-flocculated wastewater outlet.

According to an example, the coagulation tank and the flocculation tank are adjacent, optionally such that they have a common wall between them. In such a case, the coagulated wastewater outlet and the coagulated wastewater inlet can both be constituted by one or more apertures formed in that common wall, and thereby facilitate free flow of coagulated wastewater from the coagulation tank to the flocculation tank.

The raw wastewater inlet and the coagulated wastewater outlet can be arranged on the coagulation tank so as to create a flow regime within the coagulation tank which causes a volume of wastewater entering through the raw wastewater inlet to spend enough time in the coagulation tank to allow sufficient coagulation to occur.

Similarly, the coagulated wastewater inlet and the coagulated-flocculated wastewater outlet can be arranged on the flocculation tank to create a flow regime within the flocculation tank which causes a volume of wastewater entering through the coagulated wastewater inlet to spend enough time in the flocculation tank to allow sufficient flocculation to occur.

The definition of sufficient *flocculation* as well as of sufficient *coagulation can* differ between users of the wastewater treatment system, namely, due to differences in their relevant local water regulations.

The filtration module is a conveyor configured to convey sludge from the intake area to sludge outlet, while facilitating percolating of liquid therethrough along the way. The liquid percolates through the conveyor, optionally onto a gutter-like element configured to funnel the liquid to the liquid outlet. According to an example, this gutter-like element is a slide configured to funnel the liquid by gravity.

A conveyor type filtration module can facilitate rapid separation of the slurry.

Since the wastewater slurry is initially received at the intake area of the conveyor, most of the separation between the sludge and the liquid occurs there. For that reason the level of the filter cake at the intake area is important for determining the quality of the liquid at the liquid outlet.

The rate of conveyance of sludge from the intake area to the sludge outlet can determine the level of the filter cake at least at the intake area. The higher the rate of conveyance is, the less sludge is accumulated at the intake area, thus the lower the filter cake is.

According to an example, the system is configured to facilitate free flow of coagulated-flocculated wastewater from the coagulated-flocculated wastewater outlet to the intake area of the conveyor, which can be facilitated by gravity and head of wastewater in the coagulation-flocculation assembly. In this case, the conveyance rate of the sludge can be determined according to readings of a head sensor configured to measure a level parameter indicative to the head of wastewater in the coagulation-flocculation assembly, so as to maintain at least a minimal level of the filter cake.

It should be appreciated that the coagulated-flocculated wastewater outlet can be disposed above the intake area of the slurry separator, and thereby facilitate delivering of the coagulated-flocculated wastewater thereto in free flow by gravity. The level of the coagulated-flocculated wastewater outlet above the intake area can be optimized to reduce splashing.

The conveyor can be at least partially sloped upwards towards the sludge outlet to contribute to the forming of the filter cake. To facilitate forming of the filter cake at the intake area, the sloping of the conveyor can be performed specifically just there or throughout its entire length. In such a case, it can be appreciated that the filter cake can lean on a wall of the coagulation-flocculation assembly, which optionally containing the coagulated-flocculated wastewater outlet, to thereby enhance its stability. Alternatively, the filtration module can be horizontal and include a barrier, configured to hold back some of the slurry to ensure the minimal level of the filter cake at an area of the filtration module before the barrier.

To prevent plugging of the filtration module, the conveyor can be a self-cleaning conveyor, optionally containing rows of rotating blades, such that each row is aligned with its adjacent other to cause each blade in the row to slide over a mating blade in the adjacent row with each rotation. The rotation of the blades can advance the sludge from the intake area to the sludge outlet, whilst the sliding of the blades on each other can clean them with each rotation. The percolating of liquid in this case can be performed through the area between the blades.

According to an example the conveyor can be a wave separator/multi-disc roller separator by: Kendensha/Trident/Benenv et cetera
According to an example, the system can further comprise a turbidity sensor configured to sense a turbidity parameter indicative of turbidity of the liquid at the area of the liquid outlet, e.g., turbidity at the gutter-like element or in the effluent conduit.

It can be appreciated that the introduction of at least one of the flocculating agent and the coagulating agent can be performed at an adjustable supply rate, optionally by a designated dispenser. The dispenser can be a pump when the respective agent is dissolved in liquid, or a particulate material dispenser, e.g., powdered, granulized, etc. According to an example, the adjustable rate can be determined according to readings of the turbidity sensor, so as to maintain at least a maximal level of turbidity of liquid at the liquid outlet.

The system can further comprise a floc sensor configured to sense a size parameter indicative of at least one attribute related to the flocs in the slurry such as size of flocs in the slurry, shape of flocs in the slurry, color of the slurry, color of the flocs, and contrast of the color of the flocs with respect to the slurry. The floc sensor can be configured to operate at an area of the coagulated-flocculated wastewater outlet, or at the area of the liquid outlet. The floc sensor can be optic, e.g., a camera, optionally equipped with an image processing module.

It can further be appreciated that at least one of the above adjustable supply rates can be determined according to readings of the floc sensor, e.g., so as to maintain the size of the flocs in the slurry, at the area of the coagulated-flocculated wastewater outlet, within a predetermined range.

According to an example, the system further comprises a floc-size sensor configured to sense a size parameter indicative of size of flocs in the slurry at an area of coagulated-flocculated wastewater outlet, e.g., flock size at an area of the coagulated-flocculated wastewater outlet. According to an example, this floc-size sensor is optic based, e.g., a camera coupled to an image processing module configured to analyze images produced by the camera to evaluate a common floc-size.

According to an example, the supply rate of the coagulating agent is determined according to readings of the turbidity sensor, and the supply rate of the flocculating agent is determined according to readings of the floc-size sensor.

The supply rate of flocculating agent determines the common floc-size in the slurry, as the more flocculating agent is dosed into the slurry, the smaller the flocs therein. For example, when it is desired to achieve flocs which are big enough to be filterable, the supply rate of flocculating agent can decrease as the common floc-size measured increases.

According to an example, when the value of the turbidity parameter read by the turbidity sensor increases, the supply rate of the coagulating agent increases, and, respectively, when the value of the size parameter read by the floc-size sensor increases, supply rate of the flocculating agent decreases.

Optionally, when the floc-size sensor readings exceed a certain value, the supply rate of the flocculating agent reduces and even stops.

According to the invention, there is provided a method for treating wastewater comprising the steps of:
**(a)** providing a coagulation-flocculation assembly;
**(b)** providing a filtration module configured to facilitate percolating of liquid therethrough and forming of a filter cake thereon;
**(c)** introducing raw wastewater to the coagulation-flocculation assembly;
**(d)** mixing the raw wastewater with a coagulating agent in the coagulation-flocculation assembly so as to achieve coagulated wastewater;
**(e)** flocculating the coagulated wastewater in the coagulation-flocculation assembly, so as to achieve coagulated-flocculated wastewater slurry;
**(f)** applying the coagulated-flocculated wastewater slurry onto the filter cake at the filtration module so as to separate the coagulated-flocculated wastewater slurry to liquid and sludge;
**(g)** removing sludge from the filtration module;
**(h)** sensing a level parameter indicative of a level of the filter cake;
**(i)** responsive to the level parameter, generating a rate control signal configured to alter a rate of removal of sludge from the filtration module.
According to an example, where the flocculation of the coagulated wastewater includes mixing of the coagulated wastewater with the flocculating agent, the method can further comprise the steps of:
**(a)** sensing a turbidity parameter indicative of turbidity of the liquid; and
**(b)** determining the amount of at least one of coagulating agent and flocculating agent being mixed, according to the value of the turbidity parameter so as to maintain at least a maximal level of turbidity of liquid.
According to yet another example, the method can further comprise the steps of:
**(a)** sensing a size parameter indicative of size of flocs in the slurry at an area of the coagulated-flocculated wastewater outlet; and
**(b)** determining the amount of at least one of coagulating agent and flocculating agent being mixed, according to the value of the size parameter so as to maintain the size of the flocs in the slurry at the area of coagulated-flocculated wastewater outlet within a predetermined range.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:
**Fig. 1** illustrates a block diagram of a wastewater system according to an example of the presently disclosed subject matter, in use in a dairy farm facility;
**Fig. 2A** illustrates a side view of an example of the system of Fig. 1, where some walls have been removed to reveal objects behind them;
**Fig. 2B** illustrates a side perspective view of the system of Fig. 1;
**Fig. 3A** illustrates a front perspective view of a conveyor of the system;
**Fig. 3B** illustrates a top perspective view of a conveyor of the system;
**Fig. 3C** illustrates a schematic cross section of the conveyor of Figs. 3A and 3B;
**Fig. 4A** illustrates a block diagram of a feedback process between a sensor and a controller according to an example of the presently disclosed subject matter;
**Fig. 4B** illustrates a block diagram of a feedback process between another sensor and the controller according to an example of the presently disclosed subject matter;
**Fig. 5A** illustrates a side perspective view of a system according to another example of the presently disclosed subject matter;
**Fig. 5B** illustrates a top view of the system of Fig. 5A, where an upper wall of a coagulation-flocculation tank thereof has been removed; and
**Fig. 6** illustrates a block diagram of a feedback process between a processor and the controller according to an example of the presently disclosed subject matter.

### DETAILED DESCRIPTION OF EMBODIMENTS

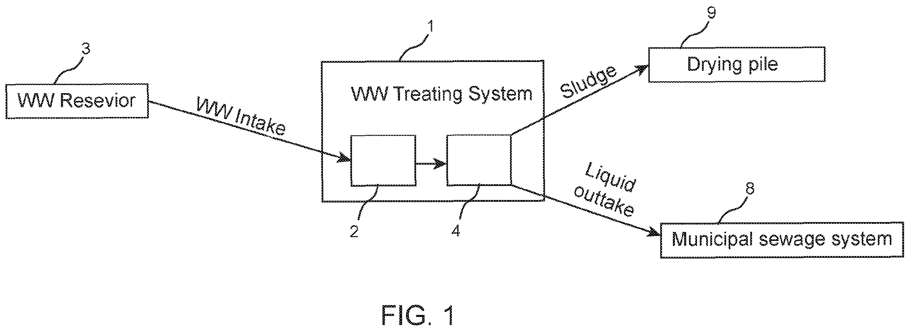

Attention is first directed to Fig. 1 of the annexed drawings, illustrating a block diagram of a wastewater treatment system **1,** according to an example of the presently disclosed subject matter;used for example in a dairy farm facility [not illustrated]. The system **1** is configured to receive wastewater intake, rich with suspended solids, from a wastewater reservoir **3,** e.g., of the dairy farm, remove suspended solids therefrom, and produce a clearer liquid outtake, containing less suspended solids than the wastewater intake.

The system **1** comprises a coagulation-flocculation assembly **2** and a slurry separator **4.**

The coagulation-flocculation assembly **2** is configured to receive the raw wastewater, facilitate coagulation and flocculation processes thereto so as to flock the suspended solids in the raw wastewater, and thereby turn the raw wastewater into a coagulated-flocculated wastewater slurry. The coagulation-flocculation assembly **2** is further configured to dispense the coagulated-flocculated wastewater slurry to the slurry separator **4** for separation thereof to liquid and sludge. The slurry separator **4** is configured to separate the wastewater slurry to liquid and sludge, dispense the liquid, optionally, to an effluent discharge, optionally directed to a municipal sewage system **8,** and dispense the sludge, optionally, to a drying pile **9,** where it can dry up and turn into manure, which can be later used for example for fertilizing fields.

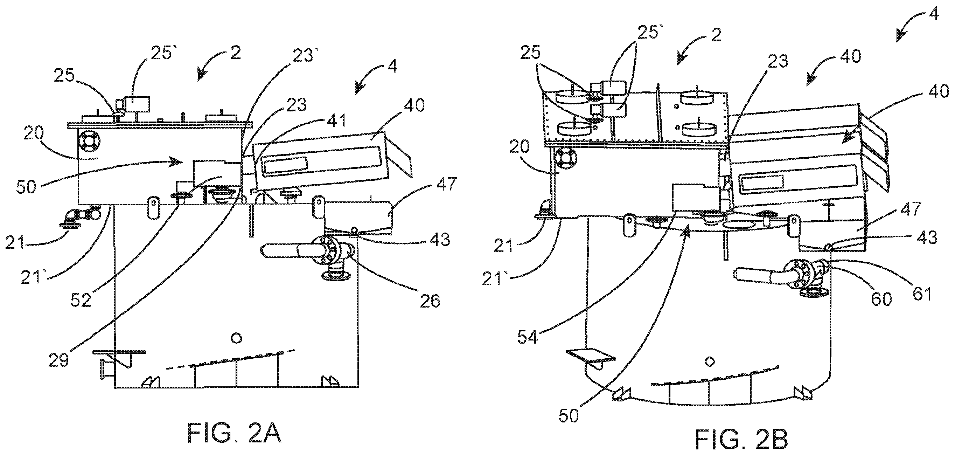

With further reference being made also to Figs. **2A** and **2B****,** the coagulation-flocculation assembly **2** comprises a main tank **20** having a raw wastewater inlet **21** configured to receive raw wastewater from the wastewater reservoir **3** of the cowshed, through a supply line [not illustrated] coupled thereto. The raw wastewater inlet **21** is positioned in a bottom wall **21'** of the main tank, thereby inducing flow of the raw wastewater entering the main tank **20**. The main tank **20** further comprises two coagulated-flocculated wastewater outlets **23,** each of which wider than the raw wastewater inlet, thus, it should be appreciated that the flow of coagulated-flocculated wastewater slurry out of the main tank **20** through the coagulated-flocculated wastewater outlet **23** is slower than the flow of raw wastewater into the main tank **20** through the raw wastewater inlet **21.** The coagulated-flocculated wastewater outlets 23 are positioned in mid-height of a vertical exit wall **23'** of the main tank, thereby constituting an overflow arrangement configured to facilitate passage therethrough for an upper portion of a given volume of wastewater. This upper portion is normally more sludgy and foamy than a respective lower portion of the same volume of wastewater, and is thus more suitable for separation thereof at the slurry separator **4.**

The slurry separator **4** comprises two filtration modules **40,** each having a coagulated-flocculated wastewater inlet **41** in flow communication with a respective coagulated-flocculated wastewater outlet **23** of the main tank **20,** and is configured to receive coagulated-flocculated wastewater slurry therefrom. The flow communication herein is established via an auxiliary duct **44,** configured to prevent splashes of coagulated-flocculated wastewater slurry when the latter passes from the outlet **23** to the inlet **41.** In other embodiments of the presently disclosed subject matter;the outlet **23** and the inlet **41** can both be constituted by a single aperture.

On top of the main tank **20** there are two coagulating agent inlets 25, each of which is connected to a dispenser **25',** configured to dispense coagulating agent therethrough to the main tank **20.** According to an example of the present disclosure, the dispenser **25'** is configured to release predetermined doses of coagulating agent to the main tank **20** at predetermined time lapses, optimized by an installer of the system **1** according to needs of a user of the system **1.** The time lapses, as well as the size of the doses, can be preprogrammed to the dispenser **25'** to determine a dosing rate of the flocculating agent, or be adjusted in real time by an actuator thereof [not illustrated], optionally coupled to a control system. The coagulating agent can be in the form of a solution, particulate material, or any other form which allow it to be mixed with the raw wastewater, and comprise for example salts of aluminum, iron, titanium, zirconium, or any other material being effective as a coagulating agent.

In operation, raw wastewater, rich with suspended solids, enter the main tank **20** through the raw wastewater inlet **21,** where they are being mixed with coagulating agent being dispensed to the main tank **20** through the coagulating agent inlets **25** by the respective dispensers **25',** causing the raw wastewater to go through a coagulation process and become coagulated wastewater.

The coagulated wastewater continues to mix by inertia inside the main tank **20,** and thereby inducing a flocculation process thereto where the suspended solids come out of suspension and flock to turn the coagulated wastewater into a coagulated-flocculated wastewater slurry. The coagulated flocculated wastewater slurry exits the main tank **20** through the coagulated-flocculated wastewater outlets **23,** and is being received at the coagulated-flocculated wastewater inlets **41** of the filtration modules **40,** to be separated thereat into liquid and sludge, as will be explained hereinafter. According to an example of the presently disclosed subject matter, the main tank **20** further includes a mixing arrangement configured to boost the mixing to the raw wastewater with the coagulating agent. The description hereinabove refers to a journey of a given volume of raw wastewater. It should be appreciated that this coagulation-flocculation process is continuous, i.e. raw wastewater continuously enter the main tank **20** through the raw wastewater inlet **21**, and go through coagulation-flocculation, while coagulated-flocculated wastewater slurry continuously exits the main tank **20** through the coagulated-flocculated wastewater outlet **23.**

The raw wastewater inlet **21** and the coagulated-flocculated wastewater outlets **23** are arranged on the main tank **20** such that a flow regime within the main tank **20** is created, which causes a given volume of raw wastewater entering through the raw wastewater inlet **21** to spend sufficient mixing time in the main tank **20** to allow sufficient coagulation and sufficient flocculation to occur. In other embodiments of the presently disclosed subject matter, the system 1 can further include a valve arrangement configured to open and close at least the coagulated-flocculated wastewater outlets, to facilitate sufficient mixing time.

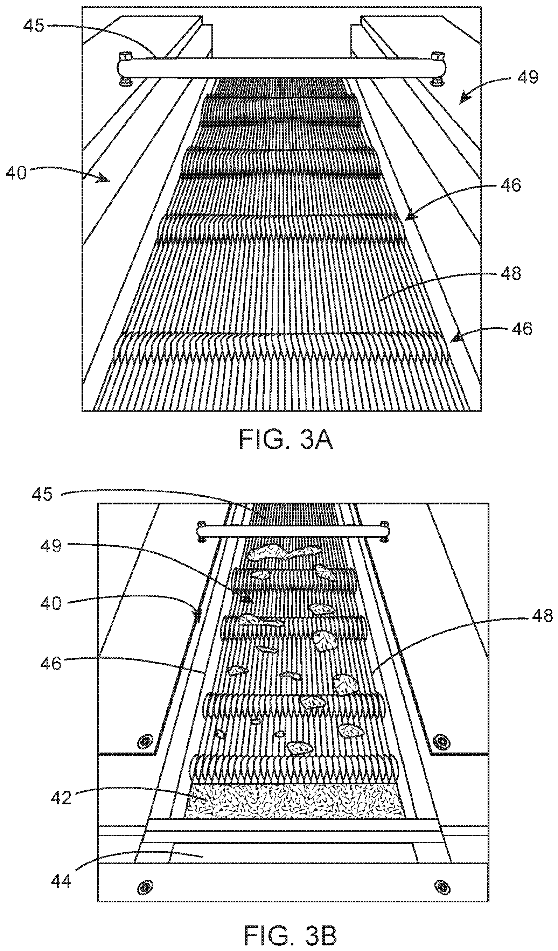

The two filtration modules **40,** each comprising a conveyor **49,** seen in Fig. 3A and 3B, configured to facilitate percolating of liquid therethrough and forming of a filter cake **80** thereon, and thereby separating the coagulated-flocculated wastewater slurry to sludge and liquid. Each conveyor **49** comprises an intake area **42** and a sludge outlet **45** disposed distal from the intake area, and is configured to receive coagulated-flocculated wastewater slurry at the intake area **42,** and convey the slurry from the intake area **42** to the sludge outlet **45,** while allowing liquid to percolate therethrough during the conveyance, so that by the time the slurry reaches the sludge outlet **45,** it is in the form of sludge.

According to other embodiments of the presently disclosed subject matter, the slurry separator can be a multi-stage slurry separator with two or more conveyors arranged sequentially one after the other, such that the sludge dispensed through the sludge outlet of the first conveyor, lands in the intake area of the sequential conveyor instead of the drying pile. Such arrangement can facilitate dryer sludge dispensed to the drying pile.

According to an example of the presently disclosed subject matter the conveyor **49** comprises rows **46** of rotating blades **48,** arranged parallel to one another from the intake area **41** to the sludge outlet, configured for pushing the slurry/sludge towards the sludge outlet **45** with every rotation thereof, while allowing liquid to percolate therebetween.

The liquid percolating through the conveyor **49** drops onto a gutter-like element **47** in the form of a slide configured to funnel the liquid to the liquid outlet **43,** from where it can be directed to the municipal sewer, optionally, by means of gravity. The sludge outlet **45** can be disposed above a designated piling area **81** of sludge, and can be configured to drop sludge onto the piling area **81,** where it can dry up and turn into manure. which can be later used for example for fertilizing fields.

The conveyor **49** can be a self-cleaning conveyor configured to prevent clogging thereof. According to an example of the presently disclosed subject matter, the rows **46** of rotating blades **48** are arranged such that each row **46** is aligned with its adjacent other to cause each blade **48** in the row to slide over a mating blade **48** in the adjacent row with every rotation, and thereby clean it.

An example of such conveyor is a wave separator/multi-disc roller separator by: Kendensha/Trident/Benenv et cetera

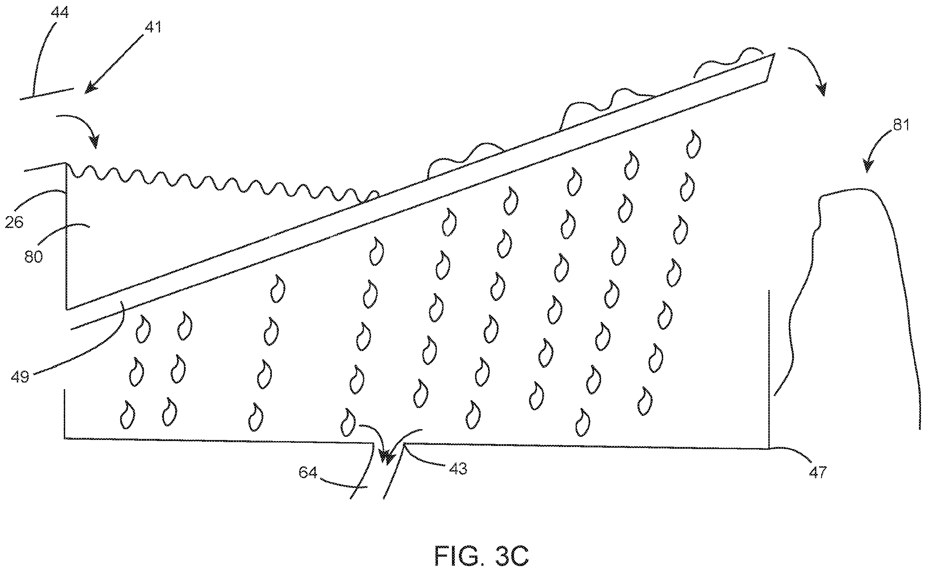

As seen in Fig. **3C****,** the conveyor **49** is sloped upwards towards the sludge outlet **45,** such that the intake area **42** is disposed at a lowermost portion thereof. Further, the coagulated-flocculated wastewater inlet **41** of each filtration module **40** is disposed above that intake area **42,** creating appropriate conditions for forming of the filter cake **80** thereat. The filter cake **80** can lean on a wall **26** containing the coagulated-flocculated wastewater outlet **41,** disposed oppositely to the sloped conveyor **49,** and thereby enhance its stability. In other embodiments of the presently disclosed subject matter [not shown], instead or in addition to the sloped conveyor **49,** the filtration module can further include a barrier at the intake area **42,** configured to partially block the passage of wastewater slurry/sludge on the conveyor, so as to maintain a minimal level of slurry/sludge, i.e., filter cake **80** at the intake area **42.**

Since the wastewater slurry is initially received at the intake area **42** of the conveyor **49,** most of the separation between sludge and liquid occurs thereat and is being facilitated by the filter cake **80.** For that reason, the level of the filter cake **80** at the intake area **42** is important for determining the quality of liquid at the liquid outlet **43.**

It should be appreciated that the conveyor **49** is configured such that the rate of conveyance of slurry/sludge from the intake area **42** to the sludge outlet **43,** i.e. the rate of rotation of the rotating blades **48** is adjustable, e.g. by an actuator [not illustrated] of the conveyor **49.** This adjustable rate affect the rate of removal of slurry/sludge from the intake area where the filter cake **80** is positioned, and thus affect the level of the filter cake **80.** The higher the rate of rotation/conveyance is, the less slurry/sludge is accumulated at the intake area **42,** thus the lower the filter cake **80** is. An effective level of the filter cake **80** should facilitate liquid outtake in a quality which meets the standards of local environmental regulations for disposal thereof through the effluent discharge, optionally to the municipal sewage system, as well as rapid conveyance of sludge to the sludge outlet.

To maintain this effective level of the filter cake **80,** the wastewater treatment system **1** further comprises a level maintaining arrangement. The level maintaining arrangement comprises a sensor configured to sense a level parameter indicative of the level of the filter cake **80** at the intake area **41,** and a controller **54** configured to adjust the level of the filter cake **80** responsive to the readings of the sensor, by controlling the actuator of the conveyor **49.**

According to an example of the presently disclosed subject matter, the sensor herein is a level sensor **52,** in other embodiments of the presently disclosed subject matter, the sensor can be an optic sensor or any other sensor configured to sense the level of the filter cake **80.** The level sensor **52** is positioned within the main tank **20,** so as to sense the level of wastewater within the main tank **20.** Since there is free flow from the coagulated-flocculated wastewater outlet **23** to the intake area **42,** i.e. onto the filter cake **80,** through the coagulated-flocculated wastewater inlet **41,** it can be appreciated that the level of wastewater within the main tank **20** is indicative of the level of the filter cake **80** at the intake area **42.**

The sensor **52** is configured to produce a level signal to the controller **54,** indicative of a current level of wastewater within the main tank **20,** i.e. indicative of the level of the filter cake **80.** The controller **54** is configured to continuously receive the level signal from the sensor **52,** and produce corresponding conveyance rate signals to the actuator [not illustrated] of the conveyor **49,** so as to adjust the conveyance/blade rotation rate of the conveyor **49,** and thereby adjust the level of the filter cake **80.** Specifically, the controller **54** is configured to increase the conveyance/blade rotation rate when the level of wastewater within the main tank **20** rises, and decrease the conveyance rate of sludge when the level of wastewater within the main tank **20** lowers, and thereby maintain a predetermined level of filter cake **80** at the intake area **41.**

The level sensor **52** can be analog or digital, it can have a continuous scale sensitive to a plurality of different levels of wastewater, or a binary scale sensitive to one or two threshold values of the level parameter. In the latter case, the sensor **52** can be configured to produce a level signal only when the level parameter rises above/goes below that threshold value.

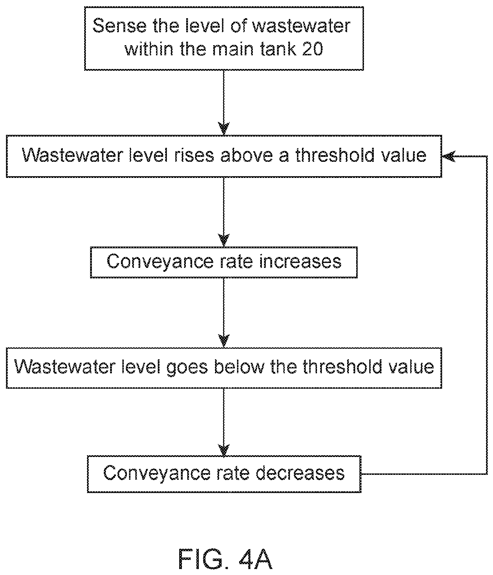

The sensor can be positioned on an inner face of a mounting wall **29** of the main tank **20,** containing the coagulated-flocculated wastewater outlet **23,** so as to sense the level of wastewater in the main tank most proximal to the coagulated-flocculated wastewater outlet **23.** The controller can be positioned anywhere in the system **1** from which it can receive the level signals from the sensor **52** and produce control signals to the actuator of the conveyor **49.** An example of a feedback process between the sensor **52** and the controller **54** is illustrated in Fig. 4A, where the conveyance rate of sludge/slurry on the conveyor **49** is determined according to readings of the level sensor **52** disposed within the main tank **20,** by the controller **54.**

According to an example of the presently disclosed subject matter, the dosing of coagulating agent to the main tank **20** is also performed at an adjustable dosing rate, controlled by an actuator [not illustrated] of the dispenser **25',** being also controlled by the controller **54.** In this example, this adjustable dosing rate determines the extent of flocculation of the coagulated-flocculated wastewater, i.e. the amount of sludge which can be separated from a volume of coagulated-flocculated wastewater slurry. The higher the dosing rate of coagulating agent to the main tank **20** is, the more sludge can be separated from a given volume of coagulated-flocculated wastewater slurry, and the clearer the liquid is at the liquid outlet. The amount of sludge in a given volume of wastewater slurry should facilitate liquid outtake in a quality which meets the standards of local environmental regulations for disposal thereof through the effluent discharge, optionally to the municipal sewage system. On the other hand, it is a purpose to avoid clogging of any component of the system **1,** which can be caused due to creating to much sludge in a given volume of wastewater slurry, i.e. due to excessive dosing of coagulating agent.

The system **1** can further include a turbidity sensor **60** configured to sense a turbidity parameter indicative of the turbidity of liquid at the liquid outlet **43.** The sensor **60** can be positioned at an outlet pipe **61** of the system funneling the liquid to the effluent discharge and can be configured to work in conjunction with the controller **54** to prevent turbidity to exceed a pre-determined level.

The turbidity sensor **60** can be optic, configured to illuminate the liquid passing in the outlet pipe **61,** and measure the incident light scattered therefrom, optionally by a photodiode, which can produce corresponding turbidity signals to the controller **54** indicative of the concentration of suspended solids in the liquid, i.e. turbidity of the liquid.

The turbidity sensor **60** can be analog or digital, it can have a continuous scale sensitive to a plurality of different turbidity levels, or a binary scale sensitive to one or two threshold values of the turbidity parameter. In the latter case, the turbidity sensor **60** can be configured to produce a turbidity signal only when the turbidity parameter rises above/goes below that threshold value.

The controller **54** can be configured to receive these turbidity signals from the turbidity sensor **60,** and produce corresponding dosing rate signals to the actuator [not illustrated] of the dispenser **25'** so as to adjust the dosing rate of coagulating agent to the main tank **20.**

Specifically, the controller **54** can be configured to increase the dosing rate of coagulating agent to the main tank **20** when the level of turbidity of liquid at the liquid outlet **43** rises, and decrease tha dosing rate when the level of turbidity of liquid at the liquid outlet **43** lowers, so as to maintain a predetermined level of turbidity of liquid at the liquid outlet **43.**

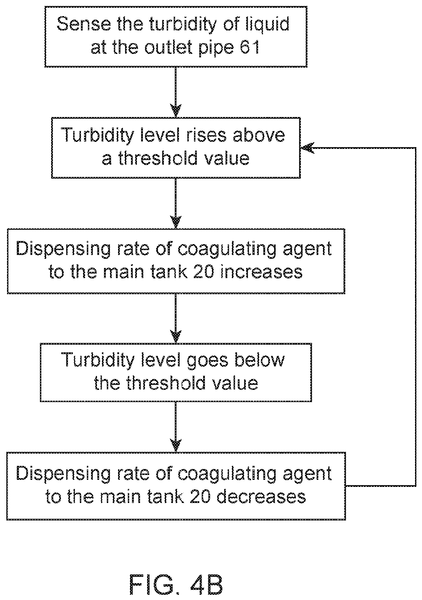

An example of a feedback process between the sensor **60** and the controller **54** is illustrated in Fig. 4B, where the dosing rate of coagulating agent to the main tank **20** is determined according to readings of turbidity sensor **60** disposed on the outlet pipe **61,** by the controller **54.**

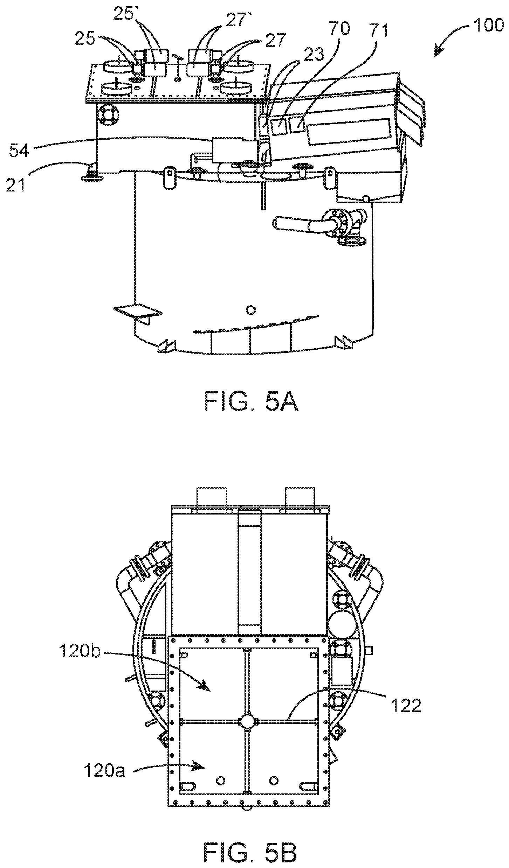

Figs 5A and 5B illustrate another example of a wastewater treatment system **100** in which the main tank is divided to a coagulation tank **120a** configured to facilitate coagulation of raw wastewater therein to achieve coagulated wastewater, and a flocculation tank **120b** configured to facilitate flocculation of the coagulated wastewater therein to achieve coagulated-flocculated wastewater slurry.

The coagulation tank **120a** comprises the raw wastewater inlet **21,** whilst the flocculation tank **120b** comprises the coagulated-flocculated wastewater outlets **23.** The two tanks are disposed adjacent to each other such that they have a common wall **122** between them, with an aperture [not seen] allowing free flow therebetween, and thereby constituting an outlet of the coagulation tank **120a** as well as an inlet of the flocculation tank **120b.**

In this example, the two coagulation agent inlets **25** are disposed on top of the coagulation tank **120a** and are configured to facilitate the dosing of coagulating agent to the coagulation tank **120a.**

In operation, raw wastewater, rich with suspended solids, enter the main tank **20** through the raw wastewater inlet **21,** where they are being mixed with coagulating agent being dispensed to the main tank **20** through the coagulating agent inlets **25** by the respective dispensers **25',** causing the raw wastewater to go through a coagulation process and become coagulated wastewater.

The system **1** further comprises two flocculation agent inlets **27** disposed on top of the flocculation tank **120b,** each of which being connected to a dispenser **27',** configured to dispense flocculating agent therethrough to the flocculation tank **120b.**

According to an example of the present disclosure, the dispenser **27'** is configured to release predetermined doses of flocculating agent to the flocculation tank **120b** at predetermined time lapses, optimized by an installer of the system **1** according to needs of a user of the system **1.** The time lapses, as well as the size of the doses can be preprogrammed to the dispenser **25',** or be adjusted in real time by an actuator thereof [not illustrated], optionally coupled to a control system, to determine a dosing rate of the coagulating agent. The flocculating agent can be in the form of a solution, particulate material, or any other form which allow it to be mixed with the coagulated wastewater, and comprise for example salts of aluminum, iron, calcium, magnesium, or any other material being effective as a flocculating agent.

In operation, raw wastewater, rich with suspended solids, enter through the raw wastewater inlet **21** into the *coagulation* tank **120a,** and continue from there to the flocculation tank **120b** through the aperture in the wall **122.** Simultaneously, coagulating agent and flocculating agent are dispensed to the *coagulation* tank **120a** and the flocculation tank **120b** respectively, through their respective inlets **25,27** by their respective dispensers **25',27',** at a predetermined rate. The raw wastewater are mixed by inertia within the coagulation tank **120a** together with the coagulation agent and turn into coagulated wastewater, which exits the coagulation tank **120a** through the aperture in the wall **122** to reach the flocculation tank **120b** and mix thereat, also by inertia with the flocculation agent. The raw wastewater inlet **21** and the aperture in the wall **122** are arranged such that a flow regime within the coagulation tank **120a** is created, which causes the raw wastewater entering through the raw wastewater inlet **21** to spend enough time mixing in the coagulation tank **120a** to allow sufficient coagulation to occur, before exiting the coagulation tank **120a** through the aperture in the wall **122** as coagulated wastewater.

The coagulated wastewater enter the flocculation tank **120b** through the aperture in the wall **122,** and mix there by inertia with the flocculation agent, before exiting the flocculation tank **120b** through the coagulated-flocculated wastewater outlet **23** as coagulated-flocculated wastewater slurry.

It should be appreciated that the aperture in the wall **122** and the coagulated-flocculated wastewater outlet **23** are arranged on the flocculation tank such that a flow regime within the flocculation tank **120b** is created, which causes the coagulated wastewater entering through the aperture to spend enough time mixing in the flocculation tank **120b** to allow sufficient flocculation to occur, before exiting the flocculation tank **120b** as coagulated-flocculated wastewater.

As a whole, in the coagulation-flocculation process as described, raw wastewater enters through the raw wastewater inlet **21,** and turns into coagulated-flocculated wastewater slurry exiting through the raw wastewater outlet **23.**

According to an example of the presently disclosed subject matter, the dosing of flocculating agent to the flocculation tank **120b** is also performed at an adjustable dosing rate, controlled by an actuator [not illustrated] of the dispenser **27',** being also controlled by the controller **54.** In this example, this adjustable dosing rate determines the extent of aggregation of solids in the coagulated-flocculated wastewater slurry, i.e. the amount of flocks of solids, which either precipitate to the bottom or float to the surface of the liquid, in a given volume of coagulated-flocculated wastewater slurry. The higher the dosing rate of flocculating agent to the flocculation tank **120b** is, the more flocks of formerly suspended solids will be present in a given volume of coagulated-flocculated wastewater slurry. The amount of flocked solids in a given volume of wastewater slurry should facilitate liquid effluent in a quality which complies with limits of local environmental regulations. On the other hand, it is a purpose to avoid having small flocks, since these flocks can percolate together with the liquid through the filtration module **40.**

The system **1** can further include a floc-size sensor configured to sense parameter indicative of the common size of flocs in the coagulated-flocculated wastewater slurry at an area of the coagulated-flocculated wastewater outlet. The floc-size sensor can be positioned in the auxiliary duct **44** funneling the coagulated-flocculated wastewater slurry from the outlet **23** of the flocculation tank **120b** to the inlet **41** of the filtration module.

According to an example of the presently disclosed subject matter, the floc-size sensor is in the form of a camera **70** configured to monitor the slurry passing in the duct **44.** The camera **70** can be configured to work in conjunction a processor **71** equipped with an image processing module, configured to process images from the camera **70** to evaluate the common size of flocs in the slurry. The camera **70** together with the processor **71** can be configured to work in conjunction with the controller **54,** to form a floc-size maintaining arrangement, configured to maintain the floc-size in the slurry at an area of the duct, i.e. at an area of the coagulated-flocculated wastewater outlet **23,** within a predetermined range.

The processor **71** can have a continuous scale sensitive to a plurality of different floc-sizes, or a binary scale sensitive to two threshold values of floc-size. In the latter case, the processor **71** can be configured to produce a size signal when the common size of flocks rises above and goes below each of the two threshold values.

The controller **54** can be configured to receive these size signals from the processor **71,** and produce corresponding dosing rate signals to the actuator [not illustrated] of the dispenser **27'** so as to adjust the dosing rate of flocculating agent to the flocculating tank **120b.**

Specifically, the controller **54** can be configured to increase the dosing rate of flocculating agent to the flocculation tank **120b** when the floc, size in the slurry at the duct **44** rises above a first threshold, and decrease that dosing rate when the floc size in the slurry at the duct **44** goes below a second threshold, lower than the first, so as to maintain the floc-size in the slurry at the duct **44** within the predetermined range.

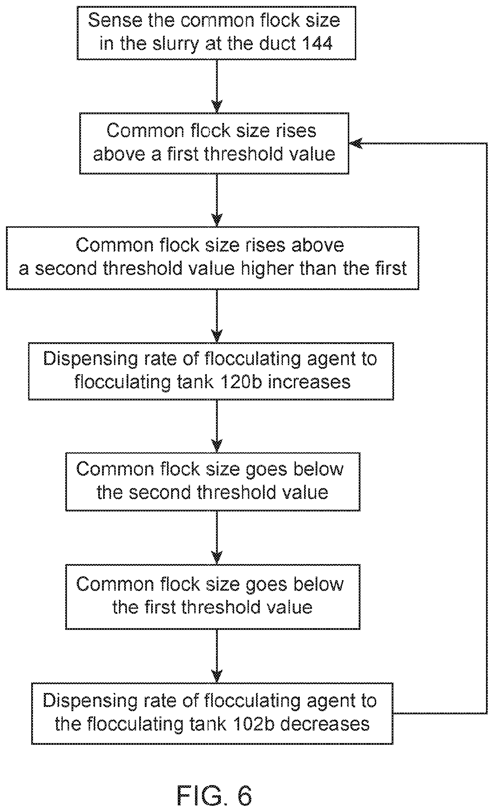

An example of a feedback process between the processor **71** and the controller **54** is illustrated in Fig. 6, where the dosing rate of coagulating agent to the flocculation tank 120b is determined according to readings of the camera **70,** by the controller **54.**

Overall, the process of receiving wastewater, rich with suspended solids, and performing coagulation-flocculation thereon to turn them into coagulated-flocculated wastewater slurry, and then performing separation of the slurry to liquid and sludge, as performed by the systems **1** and **100** includes:
**(a)** providing a coagulation-flocculation assembly e.g., the main tank **20,** or the coagulation tank **120a** together with the flocculation tank **120b;**
**(b)** providing a filtration module, e.g., the filtration module 40, configured to facilitate percolating of liquid therethrough and forming of a filter cake thereon;
**(c)** introducing raw wastewater to the coagulation-flocculation assembly, e.g. through the raw wastewater inlet **21;**
**(d)** mixing the raw wastewater with a coagulating agent in the coagulation-flocculation assembly so as to achieve coagulated wastewater;
**(e)** flocculating the coagulated wastewater in the coagulation-flocculation assembly, so as to achieve coagulated-flocculated wastewater slurry;
**(f)** applying the coagulated-flocculated wastewater slurry onto the filter cake at the filtration module so as to separate the coagulated-flocculated wastewater slurry to liquid and sludge;
**(g)** removing sludge from the filtration module, i.e. from the filter cake, at an adjustable rate;
**(h)** sensing a level parameter indicative of a level of the filter cake;
**(i)** responsive to the level parameter, generating a rate control signal configured to alter a rate of removal of sludge from the filtration module.

According to an example, the flocculation of the coagulated wastewater includes mixing of the coagulated wastewater with the flocculating agent.

The method can further comprises the steps of:
**(a)** sensing a turbidity parameter indicative of turbidity of the liquid, e.g., at the liquid outlet **43,** e.g. sensing the turbidity of liquid at the liquid outtake supply line by the turbidity sensor **60;** and
**(b)** determining the amount of at least one of coagulating agent and flocculating agent being mixed, according to the value of the turbidity parameter so as to maintain at least a maximal level of turbidity of liquid, e.g., at the liquid outlet **43,** by the controller **54.**

The process can further comprise the steps of:
**(a)** sensing a size parameter indicative of size of flocs in the slurry at an area of coagulated-flocculated wastewater outlet **23,** i.e. monitoring the floc-size thereat by the camera **70** together with the processor **71.**
**(b)** determining the amount of at least one of coagulating agent and flocculating agent being mixed, according to the value of the size parameter so as to maintain the size of the flocs in the slurry, e.g., at the area of the coagulated-flocculated wastewater outlet **23** within a predetermined range, e.g., by the controller **54.**

It should be appreciated that although the raw wastewater intake to the coagulation-flocculation assembly **2** originates in the wastewater reservoir of the dairy farm, according to some embodiments of the present disclosure, these raw wastewater has gone through preliminary mixing in a mixing tank **9** after being pumped from the reservoir and before entering the coagulation-flocculation assembly **2.**

## Claims

1. A system (1) for treating wastewater comprising:
a coagulation-flocculation assembly (2) having a raw wastewater inlet (21), a coagulated-flocculated wastewater outlet (23), a coagulating agent inlet configured to facilitate introduction of coagulating agent to the coagulation-flocculation assembly, said coagulation-flocculation assembly being configured to receive raw wastewater through said raw wastewater inlet (21), facilitate mixing of the raw wastewater with the coagulating agent therein so as to form coagulated wastewater, facilitate flocculation of coagulated wastewater so as to form coagulated-flocculated wastewater slurry, and dispense the coagulated-flocculated wastewater slurry through said coagulated-flocculated wastewater outlet (23); and
a slurry separator (4) comprising an intake area (42) configured for receiving wastewater slurry from said coagulated-flocculated wastewater outlet (23), a liquid outlet (43), a sludge outlet (45), and a filtration module (40) configured to facilitate percolating of liquid therethrough and forming of a filter cake (80) thereon; said slurry separator (4) being configured to receive slurry at said intake area (42), separate said slurry to liquid and sludge by said filtration module (40), remove said liquid via said liquid outlet (43), and convey said sludge from the intake area (42) to said sludge outlet (45);
wherein said filtration module is a conveyor (49) configured to convey sludge from said intake area (42) to said sludge outlet (45), while facilitating percolating of liquid therethrough,
wherein the removal of the sludge through the sludge outlet (45) is performed at an adjustable rate, controlled by a respective actuator thereof, and
wherein the system further comprises a level maintaining arrangement configured to maintain at least a minimal level of the filter cake, comprising:
a sensor (52) configured to sense a level parameter indicative of the height of the filter cake on the filtration module (40), and produce a corresponding level signal indicative of the value of said level parameter; and
a controller (54) configured to receive said level signal and produce a corresponding rate signal configured to be received by the respective actuator so as to adjust the respective rate of the removal of sludge from the filtration module (40), to maintain at least a minimal level of the filter cake on the filtration module (40).

2. The system for treating wastewater according to claim 1, wherein said coagulation-flocculation assembly (2) comprises:
a coagulation tank (120a) comprising said raw wastewater inlet (21), a coagulated wastewater outlet, and a coagulating agent inlet (25), said coagulation tank (120a) being configured to receive raw wastewater through said raw wastewater inlet (21), facilitate mixing of the raw wastewater with the coagulating agent therein, and facilitate evacuating of coagulated wastewater therefrom through said coagulated wastewater outlet; and
a flocculation tank (120b) comprising a coagulated wastewater inlet being in flow communication with said coagulated wastewater outlet, and a coagulated-flocculated wastewater outlet (23); said flocculation tank being configured to receive coagulated wastewater through said coagulated wastewater inlet, facilitate flocculation of the coagulated wastewater therein, and facilitate dispensing of said coagulated-flocculated wastewater therefrom through said coagulated-flocculated wastewater outlet (23).

3. The system according to any one of the preceding claims, wherein the coagulation-flocculation assembly further comprises a flocculating agent inlet (25) configured to facilitate introduction of flocculating agent to the coagulation-flocculation assembly (2).

4. The system for treating wastewater according to any one of the preceding claims, wherein the system further comprises a turbidity sensor (60) configured to sense a turbidity parameter indicative of a turbidity of said liquid.

5. The system according to Claim 4, wherein the introduction of at least one of said flocculating agent and said coagulating agent is performed at an adjustable supply rate determined according to readings of said turbidity sensor (60) so as to maintain at least a maximal level of turbidity of said liquid.

6. The system according to any one of the preceding claims, further comprising a floc-size sensor (70) configured to sense a size parameter indicative of size of flocs in said slurry at an area of said coagulated-flocculated wastewater outlet (23).

7. The system according to Claim 6, wherein the introduction of at least one of said flocculating agent and said coagulating agent is performed at an adjustable supply rate determined according to readings of said floc-size sensor (70) so as to maintain the size of the flocs in said slurry at an area of said coagulated-flocculated wastewater outlet within a predetermined range.

8. The system according to any one of the preceding claims, wherein said conveyor (49) is at least partially sloped upwards towards said sludge outlet so as to contribute to the forming of the filter cake.

9. A method for treating wastewater with the system of claim 1, comprising the steps of:
(a) providing a coagulation-flocculation assembly (2);
(b) providing a filtration module (40) configured to facilitate percolating of liquid therethrough and forming of a filter cake (80) thereon, wherein said filtration module is a conveyor (49);
(c) introducing raw wastewater to the coagulation-flocculation assembly (2);
(d) mixing the raw wastewater with a coagulating agent in the coagulation-flocculation assembly (2) so as to achieve coagulated wastewater;
(e) flocculating the coagulated wastewater in the coagulation-flocculation assembly, so as to achieve coagulated-flocculated wastewater slurry;
(f) applying the coagulated-flocculated wastewater slurry onto the filter cake at the filtration module (40) so as to separate the coagulated-flocculated wastewater slurry to liquid and sludge;
(g) removing sludge from the filtration module (40);
(h) responsive to a level parameter indicative of the height of the filter cake, generating a rate control signal configured to alter a rate of removal of sludge from the filtration module (40) via said conveyor (49), to maintain at least a minimal level of the filter cake on the filtration module (40).

10. The method according to Claim 9, wherein the flocculation of the coagulated wastewater includes mixing of the coagulated wastewater with the flocculating agent, further comprises the steps of:
a. sensing a turbidity parameter indicative of turbidity of the liquid; and
b. determining the amount of at least one of coagulating agent and flocculating agent being mixed, according to the value of the turbidity parameter so as to maintain at least a maximal level of turbidity of liquid.

11. The method according to Claim 9 or Claim 10, further comprising the steps of:
c. sensing a size parameter indicative of size of flocs in slurry at an area of the coagulated-flocculated wastewater outlet; and
d. determining the amount of at least one of coagulating agent and flocculating agent being mixed, according to the value of the size parameter so as to maintain the size of the flocs in the slurry at the area of coagulated-flocculated wastewater outlet (23) within a predetermined range.

## Patentansprüche

1. System (1) zum Behandeln von Abwasser, das Folgendes umfasst:
eine Koagulation-Flokkulation-Anordnung (2) mit einem Rohabwassereinlass (21), einem Auslass (23) für koaguliertes flokkuliertes Abwasser, einem Einlass für ein Koagulationsmittel, der dazu ausgelegt ist, die Einleitung eines Koagulationsmittels in die Koagulation-Flokkulation-Anordnung zu erleichtern, wobei die Koagulation-Flokkulation-Anordnung dazu ausgelegt ist, Rohabwasser durch den Rohabwassereinlass (21) aufzunehmen, das Mischen des Rohabwassers mit dem Koagulationsmittel darin zu erleichtern, um koaguliertes Abwasser zu bilden, eine Flokkulation von koaguliertem Abwasser zu erleichtern, um einen koagulierten flokkulierten Abwasserschlamm zu bilden, und den koagulierten flokkulierten Abwasserschlamm durch den Auslass (23) für koaguliertes flokkuliertes Abwasser auszugeben; und
einen Schlammseparator (4), der einen Einlassbereich (42), der dazu ausgelegt ist, Abwasserschlamm vom Auslass (23) für koaguliertes flokkuliertes Abwasser aufzunehmen, einen Flüssigkeitsauslass (43), einen Klärschlammauslass (45) und ein Filtrationsmodul (40) umfasst, das dazu ausgelegt ist, das Perkolieren von Flüssigkeit dadurch und das Bilden eines Filterkuchens (80) darauf zu erleichtern; wobei der Schlammseparator (4) dazu ausgelegt ist, am Einlassbereich (42) Schlamm aufzunehmen, den Schlamm durch das Filtrationsmodul (40) in Flüssigkeit und Klärschlamm zu trennen, die Flüssigkeit via den Flüssigkeitsauslass (43) zu entfernen und den Klärschlamm vom Einlassbereich (42) zum Klärschlammauslass (45) zu transportieren;
wobei das Filtrationsmodul ein Förderer (49) ist, der dazu ausgelegt ist, Klärschlamm vom Einlassbereich (42) zum Klärschlammauslass (45) zu transportieren, während das Perkolieren von Flüssigkeit dadurch erleichtert wird,
wobei das Entfernen des Klärschlamms durch den Klärschlammauslass (45) mit einer einstellbaren Rate durchgeführt wird, die von einem jeweiligen Aktuator davon gesteuert wird, und
wobei das System ferner eine Maßeinhaltungsanordnung umfasst, die dazu ausgelegt ist, mindestens ein minimales Maß des Filterkuchens aufrechtzuerhalten, die Folgendes umfasst:
einen Sensor (52), der dazu ausgelegt ist, einen Maßparameter zu erfassen, der die Höhe des Filterkuchens am Filtrationsmodul (40) anzeigt, und ein entsprechendes Maßsignal zu produzieren, das einen Wert des Maßparameters anzeigt; und
eine Steuerung (54), die dazu ausgelegt ist, das Maßsignal zu empfangen und ein entsprechendes Ratensignal zu produzieren, das dazu ausgelegt ist, vom jeweiligen Aktuator empfangen zu werden, um die jeweilige Rate des Entfernens von Klärschlamm aus dem Filtrationsmodul (40) anzupassen, um mindestens ein minimales Maß des Filterkuchens am Filtrationsmodul (40) aufrechtzuerhalten.

2. System zum Behandeln von Abwasser nach Anspruch 1, wobei die Koagulation-Flokkulation-Anordnung (2) Folgendes umfasst: einen Koagulationstank (120a), der den Rohabwassereinlass (21), den Auslass für koaguliertes Abwasser und einen Einlass (25) für ein Koagulationsmittel umfasst, wobei der Koagulationstank (120a) dazu ausgelegt ist, Rohabwasser durch den Rohabwassereinlass (21) aufzunehmen, das Mischen des Rohabwassers mit dem Koagulationsmittel darin zu erleichtern und das Evakuieren von koaguliertem Abwasser daraus durch den Auslass für koaguliertes Abwasser zu erleichtern; und einen Flokkulationstank (120b), der einen Einlass für koaguliertes Abwasser, der mit dem Auslass für koaguliertes Abwasser in Flusskommunikation steht, und einen Auslass (23) für koaguliertes flokkuliertes Abwasser umfasst; wobei der Flokkulationstank dazu ausgelegt ist, koaguliertes Abwasser durch den Einlass für koaguliertes Abwasser zu empfangen, eine Flokkulation des koagulierten Abwassers darin zu erleichtern und das Ausgeben des koagulierten flokkulierten Abwassers daraus durch den Auslass (23) für koaguliertes flokkuliertes Abwasser zu erleichtern.

3. System nach einem der vorhergehenden Ansprüche, wobei die Koagulation-Flokkulation-Anordnung ferner einen Einlass (25) für ein Flokkulationsmittel umfasst, um eine Einleitung von Flokkulationsmittel in die Koagulation-Flokkulation-Anordnung (2) zu erleichtern.

4. System zum Behandeln von Abwasser nach einem der vorhergehenden Ansprüche, wobei das System ferner einen Trübungssensor (60) umfasst, der dazu ausgelegt ist, einen Trübungsparameter zu erfassen, der eine Trübung der Flüssigkeit anzeigt.

5. System nach Anspruch 4, wobei die Einleitung von mindestens einem des Flokkulationsmittels und des Koagulationsmittels mit einer anpassbaren Zufuhrrate durchgeführt wird, die gemäß Messwerten des Trübungssensors (60) bestimmt wird, um mindestens ein maximales Maß der Trübung der Flüssigkeit aufrechtzuerhalten.

6. System nach einem der vorhergehenden Ansprüche, das ferner einen Flockengrößensensor (70) umfasst, der dazu ausgelegt ist, einen Größenparameter zu erfassen, der eine Größe von Flocken im Schlamm in einem Bereich des Auslasses (23) für koaguliertes flokkuliertes Abwasser anzeigt.

7. System nach Anspruch 6, wobei die Einleitung von mindestens einem des Flokkulationsmittels und des Koagulationsmittels mit einer anpassbaren Zufuhrrate durchgeführt wird, die gemäß Messwerten des Flockengrößensensors (70) bestimmt wird, um die Größe der Flocken im Schlamm in einem Bereich des Auslasses für koaguliertes flokkuliertes Abwasser in einer vorbestimmten Spanne aufrechtzuerhalten.

8. System nach einem der vorhergehenden Ansprüche, wobei der Förderer (49) mindestens teilweise zum Klärschlammauslass nach oben geneigt ist, um zum Bilden des Filterkuchens beizutragen.

9. Verfahren zum Behandeln von Abwasser mit dem System von Anspruch 1, das die folgenden Schritte umfasst:
(a) Bereitstellen einer Koagulation-Flokkulation-Anordnung (2);
(b) Bereitstellen eines Filtrationsmoduls (40), das dazu ausgelegt ist, das Perkolieren von Flüssigkeit dadurch und das Bilden eines Filterkuchens (80) darauf zu erleichtern, wobei das Filtrationsmodul ein Förderer (49) ist;
(c) Einleiten von Rohabwasser in die Koagulation-Flokkulation-Anordnung (2);
(d) Mischen des Rohabwassers mit einem Koagulationsmittel in der Koagulation-Flokkulation-Anordnung (2), um koaguliertes Abwasser zu erreichen;
(e) Flokkulieren des koagulierten Abwassers in der Koagulation-Flokkulation-Anordnung, um einen Schlamm aus koaguliertem flokkuliertem Abwasser zu erreichen;
(f) Anwenden des Schlamms aus koaguliertem flokkuliertem Abwasser auf den Filterkuchen am Filtrationsmodul (40), um den Schlamm aus koaguliertem flokkuliertem Abwasser in Flüssigkeit und Klärschlamm zu trennen;
(g) Entfernen des Klärschlamms aus dem Filtrationsmodul (40);
(h) in Reaktion auf einen Maßparameter, der die Höhe des Filterkuchens anzeigt, Erzeugen eines Ratensteuersignals, das dazu ausgelegt ist, eine Rate des Entfernens von Klärschlamm aus dem Filtrationsmodul (40) via den Förderer (49) zu ändern, um mindestens ein minimales Maß des Filterkuchens am Filtrationsmodul (40) aufrechtzuerhalten.

10. Verfahren nach Anspruch 9, wobei die Flokkulation des koagulierten Abwassers das Mischen von koaguliertem Abwasser mit dem Flokkulationsmittel beinhaltet, das ferner die folgenden Schritte umfasst:
a. Erfassen eines Trübungsparameters, der eine Trübung der Flüssigkeit anzeigt; und
b. Bestimmen der Menge von mindestens einem des Koagulationsmittels und des Flokkulationsmittels, die gemischt werden, gemäß dem Wert des Trübungsparameters, um mindestens ein maximales Maß einer Trübung von Flüssigkeit aufrechtzuerhalten.

11. Verfahren nach Anspruch 9 oder Anspruch 10, das ferner die folgenden Schritte umfasst:
c. Erfassen eines Größenparameters, der eine Größe von Flocken im Schlamm in einem Bereich des Auslasses für koaguliertes flokkuliertes Abwasser anzeigt; und
d. Bestimmen der Menge von mindestens einem des Koagulationsmittels und des Flokkulationsmittels, die gemischt werden, gemäß dem Wert des Größenparameters, um die Größe der Flocken im Schlamm im Bereich des Auslasses (23) für koaguliertes flokkuliertes Abwasser in einer vorbestimmten Spanne aufrechtzuerhalten.

## Revendications

1. Système (1) de traitement des eaux usées comprenant :
un ensemble de coagulation-floculation (2) ayant une entrée d'eaux usées brutes (21), une sortie d'eaux usées floculées coagulées (23), une entrée d'agent coagulant configurée pour faciliter l'introduction d'un agent coagulant dans l'ensemble de coagulation-floculation, ledit ensemble de coagulation-floculation étant configuré pour recevoir des eaux usées brutes par ladite entrée d'eaux usées brutes (21), faciliter le mélange des eaux usées brutes avec l'agent coagulant à l'intérieur de sorte à former des eaux usées coagulées, faciliter la floculation des eaux usées coagulées de sorte à former une suspension d'eaux usées coagulées-floculées, et distribuer la suspension d'eaux usées coagulées-floculées par ladite sortie d'eaux usées floculées coagulées (23) ; et
un séparateur de suspension (4) comprenant une zone d'admission (42) configurée pour recevoir une suspension d'eaux usées de ladite sortie d'eaux usées floculées coagulées (23), une sortie de liquide (43), une sortie de boue (45) et un module de filtration (40) configuré pour faciliter la percolation d'un liquide à travers celui-ci et la formation d'un gâteau de filtration (80) sur celui-ci ; ledit séparateur de suspension (4) étant configuré pour recevoir la suspension dans ladite zone d'admission (42), séparer ladite suspension en liquide et en boue par ledit module de filtration (40), éliminer ledit liquide via ladite sortie de liquide (43), et transporter ladite boue de la zone d'admission (42) à ladite sortie de boue (45) ;
dans lequel ledit module de filtration est un transporteur (49) configuré pour transporter la boue de ladite zone d'admission (42) à ladite sortie de boue (45), tout en facilitant la percolation du liquide à travers celui-ci,
dans lequel l'élimination de la boue par la sortie de boue (45) est effectuée à un débit réglable commandé par un actionneur respectif de celui-ci, et
dans lequel le système comprend en outre un agencement de maintien de niveau configuré pour maintenir au moins un niveau minimal du gâteau de filtration, comprenant :
un capteur (52) configuré pour détecter un paramètre de niveau indiquant la hauteur du gâteau de filtration sur le module de filtration (40), et produire un signal de niveau correspondant indiquant la valeur dudit paramètre de niveau ; et
un dispositif de commande (54) configuré pour recevoir ledit signal de niveau et produire un signal de débit correspondant configuré pour être reçu par l'actionneur respectif, de sorte à régler le débit respectif de l'élimination de la boue du module de filtration (40) pour maintenir au moins un niveau minimal du gâteau de filtration sur le module de filtration (40).

2. Système de traitement des eaux usées selon la revendication 1, dans lequel ledit ensemble de coagulation-floculation (2) comprend : un réservoir de coagulation (120a) comprenant ladite entrée d'eaux usées brutes (21), une sortie d'eaux usées coagulées et une entrée d'agent coagulant (25), ledit réservoir de coagulation (120a) étant configuré pour recevoir les eaux usées brutes par ladite entrée d'eaux usées brutes (21), faciliter le mélange des eaux usées brutes avec l'agent coagulant à l'intérieur, et faciliter l'évacuation des eaux usées coagulées de celui-ci par ladite sortie d'eaux usées coagulées ; et un réservoir de floculation (120b) comprenant une entrée d'eaux usées coagulées en communication fluidique avec ladite sortie d'eaux usées coagulées, et une sortie d'eaux usées floculées coagulées (23) ; ledit réservoir de floculation étant configuré pour recevoir les eaux usées coagulées par ladite entrée d'eaux usées coagulées, faciliter la floculation des eaux usées coagulées à l'intérieur, et faciliter la distribution desdites eaux usées coagulées-floculées à partir de celui-ci par ladite sortie d'eaux usées floculées coagulées (23).

3. Système selon l'une des revendications précédentes, dans lequel l'ensemble de coagulation-floculation comprend en outre une entrée d'agent floculant (25) configurée pour faciliter l'introduction d'un agent floculant dans l'ensemble de coagulation-floculation (2).

4. Système de traitement des eaux usées selon l'une des revendications précédentes, dans lequel le système comprend en outre un capteur de turbidité (60) configuré pour détecter un paramètre de turbidité indiquant une turbidité dudit liquide.

5. Système selon la revendication 4, dans lequel l'introduction d'au moins un parmi ledit agent floculant et ledit agent coagulant est effectuée à un débit d'alimentation réglable déterminé selon les relevés dudit capteur de turbidité (60), de sorte à maintenir au moins un niveau maximal de la turbidité dudit liquide.

6. Système selon l'une des revendications précédentes, comprenant en outre un capteur de taille de floc (70) configuré pour détecter un paramètre de taille indiquant la taille des flocs dans ladite suspension dans une zone de ladite sortie d'eaux usées floculées coagulées (23).

7. Système selon la revendication 6, dans lequel l'introduction d'au moins un parmi ledit agent floculant et ledit agent coagulant est effectuée à un débit d'alimentation réglable déterminé selon les relevés dudit capteur de taille de floc (70) de sorte à maintenir la taille des flocs dans ladite suspension dans une zone de ladite sortie d'eaux usées floculées coagulées dans une plage prédéterminée.

8. Système selon l'une des revendications précédentes, dans lequel ledit transporteur (49) est au moins partiellement incliné vers le haut vers ladite sortie de boue de sorte à contribuer à la formation du gâteau de filtration.

9. Procédé de traitement des eaux usées à l'aide du système de la revendication 1, comprenant les étapes suivantes :
(a) fournir un ensemble de coagulation-floculation (2) ;
(b) fournir un module de filtration (40) configuré pour faciliter la percolation d'un liquide à travers celui-et la formation d'un gâteau de filtration (80) sur celui-ci, dans lequel ledit module de filtration est un transporteur (49) ;
(c) introduire des eaux usées brutes dans l'ensemble de coagulation-floculation (2) ;
(d) mélanger les eaux usées brutes avec un agent coagulant dans l'ensemble de coagulation-floculation (2) de sorte à obtenir des eaux usées coagulées ;
(e) faire floculer les eaux usées coagulées dans l'ensemble de coagulation-floculation de sorte à obtenir une suspension d'eaux usées coagulées-floculées ;
(f) appliquer la suspension d'eaux usées coagulées-floculées sur le gâteau de filtration dans le module de filtration (40) de sorte à séparer la suspension d'eaux usées coagulées-floculées en liquide et en boue ;
(g) éliminer la boue du module de filtration (40) ;
(h) en réponse à un paramètre de niveau indiquant la hauteur du gâteau de filtration, générer un signal de commande de débit configuré pour modifier un débit d'élimination de la boue du module de filtration (40) via ledit transporteur (49), pour maintenir au moins un niveau minimal du gâteau de filtration sur le module de filtration (40).

10. Procédé selon la revendication 9, dans lequel la floculation des eaux usées coagulées comporte le mélange des eaux usées coagulées avec l'agent floculant, comprenant en outre les étapes suivantes :
a. détecter un paramètre de turbidité indiquant la turbidité du liquide ; et
b. déterminer la quantité d'au moins un parmi un agent coagulant et un agent floculant en cours de mélange selon la valeur du paramètre de turbidité, de sorte à maintenir au moins un niveau maximal de turbidité du liquide.

11. Procédé selon la revendication 9 ou la revendication 10, comprenant en outre les étapes suivantes :
c. détecter un paramètre de taille indiquant la taille des flocs dans la suspension dans une zone de la sortie d'eaux usées floculées coagulées ; et
d. déterminer la quantité d'au moins un parmi un agent coagulant et un agent floculant en cours de mélange selon la valeur du paramètre de taille, de sorte à maintenir la taille des flocs dans la suspension dans la zone de la sortie d'eaux usées floculées coagulées (23) dans une plage prédéterminée.
